# EUROPÄISCHE PATENTSCHRIFT

(11) **EP 3 242 789 B1**
(45) Veröffentlichungstag und Bekanntmachung des Hinweises auf die Patenterteilung: **15.07.2020**
(21) Anmeldenummer: 15813046.8
(22) Anmeldetag: 16.12.2015
(51) Int. Cl.: B22F 3/105, B29C 64/20, B29C 64/153

(54) **MODULAR AUFGEBAUTE SLM- ODER SLS-BEARBEITUNGSMASCHINE**
MODULARLY CONSTRUCTED SLM OR SLS PROCESSING MACHINE
MACHINE D'USINAGE SLM OU SLS DE CONSTRUCTION MODULAIRE

(30) Priorität: 08.01.2015 DE 102015200134
(43) Veröffentlichungstag der Anmeldung: 15.11.2017
(73) Patentinhaber: TRUMPF Laser- und Systemtechnik GmbH, 71254 Ditzingen (DE)
(72) Erfinder: WÜST, Frank Peter, 71083 Herrenberg (DE)
(74) Vertreter: Kohler Schmid Möbus Patentanwälte
(86) Internationale Anmeldenummer: PCT/EP2015/080072
(87) Internationale Veröffentlichungsnummer: WO 2016/110388

(56) Entgegenhaltungen:
- WO-A1-2014/165735
- WO-A1-2014/199134
- DE-A1-102009 036 153

## Beschreibung

Die vorliegende Erfindung betrifft eine Bearbeitungsmaschine zum Herstellen von Bauteilen durch schichtweises Aufbauen aus Materialpulver und schichtweises Verfestigen des Materialpulvers mittels mindestens eines Energiestrahls gemäß Oberbegriff von Anspruch 1, sowie ein Modulsystem zum Zusammensetzen einer solchen Bearbeitungsmaschine.

Eine derartige Bearbeitungsmaschine (Prototyping-/Adaptive Laser Manufacturing-Anlage) zum selektiven Lasersintern oder selektiven Laserschmelzen von Materialpulver ist beispielsweise durch die WO 2010/026397 A1 bekannt geworden. Selektives Lasersintern (Selective Laser Sintering (SLS)) und selektives Laserschmelzen (Selective Laser Melting (SLM)) sind generative Schichtbauverfahren, bei denen ein Bauteil Schicht für Schicht durch Sintern oder Schmelzen eines Materialpulvers mittels eines Laserstrahls aufgebaut wird. Das Materialpulver wird auf eine Bauplattform vollflächig aufgebracht, und die Schichten werden durch eine Ansteuerung des Laserstrahles entsprechend der Schichtkontur des Bauteils schrittweise in das Pulverbett gesintert oder eingeschmolzen. Anschließend wird die Bauplattform um den Betrag einer Schichtdicke abgesenkt und erneut Pulver aufgetragen. Dieser Zyklus wird solange wiederholt, bis alle Schichten des Bauteils gesintert bzw. umgeschmolzen sind.

Die aus der WO 2010/026397 A1 bekannte SLM- oder SLS-Laserbearbeitungsmaschine umfasst ein optisches Modul, das die Strahlführung eines Laserstrahls aufweist, und einen Formungsteil, der pulverführende Komponenten, wie die Prozesskammer, aufweist.

Weiterhin ist aus der DE 10 2005 014 483 A1 eine SLM- oder SLS-Laserbearbeitungsmaschine mit mehrere Lasern bekannt, deren Laserstrahlen auf der Bauplattform unterschiedliche Bearbeitungsteilfelder abdecken, welche an ihren Feldergrenzen jeweils miteinander überlappen. Allerdings erlaubt diese Laserbearbeitungsmaschine keinen schnellen Wechsel des Materialpulvers, z.B. von Kunststoffpulver auf Metall- oder Keramikpulver; hierfür müssen alle pulverführenden Komponenten zuvor aufwändig gereinigt werden. Aus der DE 10 2009 036152 A1 ist eine portalartige, modulare Vorrichtung beschrieben zur generativen Herstellung dreidimensionaler Formteile bekannt.

Es ist demgegenüber die Aufgabe der Erfindung, bei einer SLM- oder SLS-Bearbeitungsmaschine der eingangs genannten Art die Flexibilität bezüglich ihres Bearbeitungsfeldes zu erhöhen.

Diese Aufgabe wird erfindungsgemäß durch eine Bearbeitungsmaschine mit den Merkmalen von Anspruch 1 und durch ein entsprechendes Modulsystem mit den Merkmalen von Anspruch 20 gelöst.

Erfindungsgemäß können mit wenigen Prozesskammer- und Bestrahlungsmodulen unterschiedlich große SLM- oder SLS-Bearbeitungsmaschinen flexibel hergestellt werden. Vorteilhafterweise kann mit einem solchen modularen Maschinenkonzept die Bearbeitungsmaschine sehr einfach skaliert werden: Die Prozesskammer kann zusammen mit den pulverführenden Komponenten (Beschichter/ Pulvermanagement) in verschiedenen Größen gebaut werden, während die Bestrahlungsmodulen eine Standardgröße haben und mit anderen Bestrahlungsmodulen aneinander gereiht werden können, um so ein Prozesskammermodul mit einer größeren Prozesskammer aufnehmen zu können. Dabei wird die Steuerung eines der Bestrahlungsmodule zur Mastersteuerung bzgl. der Steuerungen der anderen Bestrahlungsmodule.

Vorzugsweise entspricht die Breite der Bauplattform des Prozesskammermoduls ungefähr der Breite der Bearbeitungsfelder der mehreren Bestrahlungsmodule.

Vorzugsweise ist eines der mehreren Bestrahlungsmodule als Mastermodul und jedes andere Bestrahlungsmodul als ein vom Mastermodul gesteuertes Slavemodul betrieben. Die aneinander gereihten Bestrahlungsmodule werden steuerungstechnisch in einem Master-Slave Konzept miteinander verbunden und optisch miteinander referenziert, um das Bearbeitungsfeld auf die einzelnen Bearbeitungsteilfelder aufzuteilen. Dabei weist vorteilhaft jedes Bestrahlungsmodul eine Steuerungsschnittstelle zum Verbinden mit einer Steuerungsschnittstelle eines aneinander gereihten Bestrahlungsmoduls auf. Diese Steuerungsschnittstelle kann eine drahtlose Schnittstelle oder eine elektronische Maschinenschnittstelle sein, die beidseitig an einem Bestrahlungsmodul angeordnet ist, um sich mit der Maschinenschnittstelle eines benachbarten Bestrahlungsmoduls zu verbinden.

Vorteilhafterweise weisen eines oder einige der Bestrahlungsmodule, insbesondere alle Bestrahlungsmodule, mindestens einen optischen Sensor, insbesondere eine Kamera, auf, dessen Erfassungsbereich eingerichtet ist, zumindest teilweise ein Bearbeitungsfeld eines benachbarten Bestrahlungsmoduls zu erfassen. So kann bspw. das Mastermodul mittels seines Energiestrahls eine Bearbeitung durchführen oder festgelegte Kalibrationspunkte beleuchten, die wiederum die Kamera des benachbarten ersten Slavemoduls erfasst und damit seine eigene Positionierung gegenüber dem Mastermodul kalibriert. Das nächste Slavemodul kann sich dann auf ein bereits kalibriertes Slavemodul kalibrieren usw., bis alle Slavemodule gegenüber dem Mastermodul kalibriert sind.

Besonders bevorzugt weisen eines oder einige der Bestrahlungsmodule, insbesondere bei mehreren Bestrahlungsmodulen die äußeren Bestrahlungsmodule, oder das Prozesskammermodul Referenzierhilfen, insbesondere Seitenwangen oder Referenzierbolzen, zum Zusammensetzen der Bearbeitungsmaschine auf. Beispielsweise kann das Prozesskammermodul bei einem einzigen Bestrahlungsmodul zwischen zwei Referenzierhilfen des Bestrahlungsmoduls oder bei mehreren nebeneinander angeordneten Bestrahlungsmodulen zwischen zwei endseitig vorgesehenen Referenzierhilfen der beiden äußeren Bestrahlungsmodule angeordnet sein. Vorteilhaft weist jedes Bestrahlungsmodul beidseitig eine Schnittstelle zur lösbaren Befestigung der Seitenwangen auf. Alternativ kann auch das Prozesskammermodul Seitenwangen aufweisen, zwischen denen das eine Bestrahlungsmoduls oder die mehreren Bestrahlungsmodule angeordnet werden.

Bei besonders bevorzugten Ausführungsformen ist das Prozesskammermodul während der Bauteilherstellung ausschließlich über das mindestens eine Bestrahlungsmodul an Versorgungsquellen (Strom, Wasser, Gas, Daten) angeschlossen und mit der Steuerung des (Master) Bestrahlungsmoduls verbunden. Die komplette Versorgung des Prozesskammermoduls wird über das bzw. die Bestrahlungsmodule sichergestellt, und das (Master)Bestrahlungsmodul steuert/regelt nicht nur die Energiestrahlquelle(n) und die Strahlführung(en), sondern auch den Beschichter und das Pulvermanagement der Prozesskammer. Wenn die Herstellung der Bauteile beendet ist, kann das Prozesskammermodul auch an externe Versorgungsstationen angeschlossen werden, die bspw. Strom/Wasser liefert, um ein langsames/geregeltes Abkühlen zu erlauben, oder Gas liefern, um bei der Bauteilentnahme einen Schutzgasüberdruck zu schaffen, der die Entnahme erlaubt, ohne das Pulver größerer Konzentration atmosphärischer Gase auszusetzen. Es ist möglich, dass die Steuerung/ Regelung dieser Prozesse durch eine Steuerung des Prozesskammermoduls erfolgt, aber bevorzugt weisen die externen Versorgungsstationen eine Steuerung für solche Aufgaben auf.

Die Prozesskammer des Prozesskammermoduls ist vorteilhaft als eine in sich abgeschlossene, insbesondere evakuierbare oder durch Spülen mit einem inerten Gas im Wesentlichen von reaktiven Gasen befreibare, Kammer mit einem Prozesskammerfenster ausgeführt, durch das der mindestens eine Energiestrahl in die Prozesskammer einkoppelbar ist.

Das Prozesskammermodul und/oder das mindestens eine Bestrahlungsmodul können fahrbar, z.B. auf Rollen gelagert sein, um sie leicht und einfach zu der Laserbearbeitungsmaschine zusammenfahren zu können.

Besonders bevorzugt sind die Energiestrahlquelle als ein Laser zum Erzeugen eines Laserstrahls und die Strahlführung als eine Ablenkeinheit zum zweidimensionalen Ablenken des Laserstrahls ausgebildet. Alternativ kann die Energiestrahlquelle beispielsweise auch als Elektronenstrahlquelle ausgeführt sein, deren Elektronenstrahl auf das Pulverbett abgelenkt wird.

Beim Zusammensetzen (Andocken) des Pulverkammermoduls erfährt das Bestrahlungsmodul von einem Leitsystem, welches Bauteil hergestellt werden soll. Das Bestrahlungsmodul verfügt über eine Steuerung, die den Energiestrahl (Leistung, Orientierung, Fokus etc.) und zumindest Pulverbeschichtung und Bauplattformabsenkung steuert. Optional erkennt das Bestrahlungsmodul das Prozesskammermodul an einem einzigartigen Identifier (über Datenaustausch, Eingabe eines Bedieners, Scannen eines Barcodes/QR-Codes am Prozesskammermodul), wenn es angedockt wird, und fragt vom Leitsystem den für das Prozesskammermodul vorgesehenen Herstellungsjob ab. Optional kann die Steuerung des Bestrahlungsmoduls auch eine Pulvervorheizung/Bauteilabkühlung, die Pulveraufbereitung und/oder -förderung etc. steuern.

Vorzugsweise ist die Prozesskammer des Prozesskammermoduls gasdicht und mit einem Gaseinlass und einem Gasauslass ausgeführt, um die Prozesskammer evakuieren oder mit einem inerten Gas spülen zu können.

Bevorzugt weist das Prozesskammermodul mindestens ein unter einem Winkel gegen die Horizontale geneigtes Sieb und mindestens einen unterhalb des mindestens einen Siebs derart angeordneten Auffangbehälter auf, dass sich nicht siebbares Materialpulver gravitationsunterstützt entlang des mindestens einen Siebs bewegt und in dem mindestens einen Auffangbehälter auffangbar ist. Vorteilhafterweise ist das mindestens eine Sieb mechanisch bewegbar gelagert und durch einen Antrieb zu einer schwingenden Bewegung angetrieben.

Weiterhin bevorzugt weist das Prozesskammermodul einen in sich geschlossenen Pulverkreislauf auf, der das mindestens eine Sieb und mindestens eine Förderstrecke zum Zuführen des durch das mindestens eine Sieb gesiebten Materialpulvers in das Pulverreservoir umfasst.

Das Prozesskammermodul kann weiterhin Erfassungsmittel, insbesondere eine Waage, zur Pulvermengenerfassung im Pulverreservoir sowie einen verschließbaren Pulvereinlass zur dosierten Pulverzuführung in das Pulverreservoir oder in den Pulverkreislauf aufweisen. Beispielsweise kann eine Kartusche mit Pulver an den Pulvereinlass angeschlossen werden. Das Erfassungsmittel wiegt insbesondere nach einer Bauteilherstellung das im Pulverreservoir/Pulverkreislauf verbliebene Pulver und öffnet bei Bedarf den Pulvereinlass.

Besonders bevorzugt ist die Bauplattform von anderen Komponenten des Pulverkreislaufs gasdicht abtrennbar ausgeführt.

Die Erfindung betrifft auch ein Modulsystem zum Zusammensetzen einer wie oben ausgebildeten Bearbeitungsmaschine, mit mehreren unterschiedlich breiten Prozesskammermodulen und mit mehreren Bestrahlungsmodulen, wobei die Breite der Prozesskammermodule jeweils der Gesamtbreite von zumindest einigen, in einer Reihe nebeneinander angeordneten Bestrahlungsmodulen entspricht. Vorzugsweise sind die Bestrahlungsmodule baugleich, also insbesondere gleichbreit ausgeführt.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erfindungsgemäße SLS- oder SLM-Laserbearbeitungsmaschine;
- Fig. 2: ein Prozesskammermodul und ein Bestrahlungsmodul, aus denen die in Fig. 1 gezeigte Laserbearbeitungsmaschine lösbar zusammengesetzt ist;
- Fign. 3a, 3b: das Prozesskammermodul (Fig. 3a) und das Bestrahlungsmodul (Fig. 3b) der in Fig. 1 gezeigten Laserbearbeitungsmaschine;
- Fig. 4: eine weitere erfindungsgemäße SLS- oder SLM-Laserbearbeitungsmaschine;
- Fig. 5: ein Prozesskammermodul und zwei Bestrahlungsmodule, aus denen die in Fig. 4 gezeigte Laserbearbeitungsmaschine lösbar zusammengesetzt ist;
- Fign. 6a, 6b: das Prozesskammermodul (Fig. 6a) und die Bestrahlungsmodule (Fig. 6b) der in Fig. 4 gezeigten Laserbearbeitungsmaschine;
- Fig. 7: ein Modulsystem zum Zusammensetzen von Laserbearbeitungsmaschinen, bestehend aus mehreren Prozesskammermodulen und mehreren Bestrahlungsmodulen; und
- Fig. 8: eine Detailansicht einer Prozesskammer und einer Pulverrückgewinnung/-aufbereitung des Prozesskammermoduls.

In der folgenden Figurenbeschreibung werden für gleiche bzw. funktionsgleiche Bauteile identische Bezugszeichen verwendet.

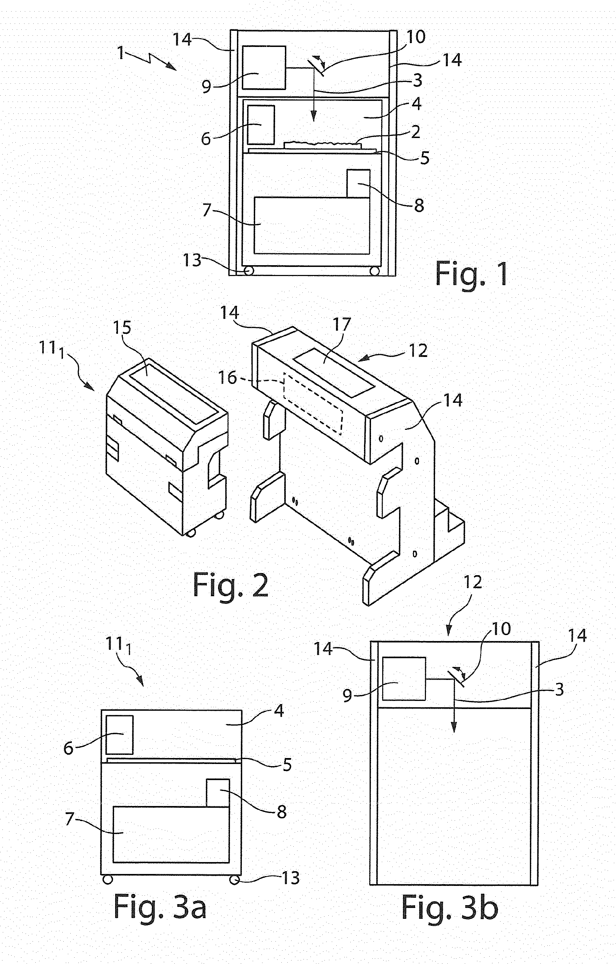

Die in **Fig. 1** gezeigte SLS- oder SLM-Laserbearbeitungsmaschine **1** dient zum Herstellen von Bauteilen durch schichtweises Aufbauen aus Materialpulver **2** und schichtweises Versintern oder Verschmelzen des Materialpulvers 2 mittels mindestens eines Laserstrahls **3.**

Die Laserbearbeitungsmaschine 1 umfasst in bekannter Weise sowohl pulverführende Komponenten, wie z.B. eine Prozesskammer **4** mit einer Bauplattform **5** und mit einem Pulverbeschichter **6** zum schichtweisen Aufbringen von Materialpulver 2 auf die Bauplattform 5, sowie ein Pulverreservoir **7** für das dem Pulverbeschichter zuzuführende Materialpulver 2 und eine Pulverrückgewinnung/-aufbereitung **8,** als auch nichtpulverführende Komponenten, wie z.B. einen Laser **9** zum Erzeugen des einen Laserstrahls 3 und eine Ablenkeinheit **10** zum zweidimensionalen Ausrichten des Laserstrahls 3 auf das auf die Bauplattform 5 aufgebrachte Materialpulver 2. Der Laser 9 und die Ablenkeinheit 10 sind oberhalb der Prozesskammer 4 angeordnet.

In der Laserbearbeitungsmaschine 1 wird ein Bauteil Schicht für Schicht durch Sintern oder Schmelzen des Materialpulvers 2 mittels des Laserstrahls 3 aufgebaut. Das Materialpulver 2 wird vom Pulverbeschichter 6 auf die Bauplattform 5 vollflächig aufgebracht, und die Schichten werden durch eine Ansteuerung des Laserstrahles 3 entsprechend der Schichtkontur des Bauteils schrittweise in das Pulverbett gesintert oder eingeschmolzen. Anschließend wird die Bauplattform 5 um den Betrag einer Schichtdicke abgesenkt und erneut Materialpulver 2 aufgetragen. Dieser Zyklus wird solange wiederholt, bis alle Schichten des Bauteils gesintert bzw. umgeschmolzen sind.

Wie in **Fig. 2** gezeigt, ist die Laserbearbeitungsmaschine 1 aus einem Prozesskammermodul **11₁** und einem Bestrahlungsmodul **12** lösbar zusammengesetzt, wobei das in **Fig. 3a** gezeigte Prozesskammermodul 11₁ alle pulverführenden Komponenten, also vorliegend Prozesskammer 4, Bauplattform 5, Pulverbeschichter 6, Pulverreservoir 7 und Pulverrückgewinnung/-aufbereitung 8, und das in **Fig. 3b** gezeigte Bestrahlungsmodul 12 die nicht-pulverführenden Komponenten, also vorliegend Laser 9 und Strahlführung 10, umfasst. Das Bestrahlungsmodul 12 ist vorzugsweise stationär ausgeführt, während das Prozesskammermodul 11₁ auf Rollen **13** verfahrbar gelagert ist. Am Bestrahlungsmodul 12 sind beidseitig zwei Seitenwangen **14** befestigt, zwischen denen das Prozesskammermodul 11₁ passgenau eingeschoben ist. Über ein oberseitiges Prozesskammerfenster **15** wird der nach unten aus dem Bestrahlungsmodul 12 austretende Laserstrahl 3 in die Prozesskammer 4 eingekoppelt. Die Versorgung des Prozesskammermoduls 11₁ mit Strom, Wasser, Steuerungsdaten etc. erfolgt ausschließlich über das Bestrahlungsmodul 12, wobei die hierfür am Prozesskammermodul 11₁ und am Bestrahlungsmodul 12 erforderlichen Anschlüsse und Schnittstellen nicht gezeigt sind. Das Prozesskammermodul 11₁ weist selbst keine eigene Steuerung zur Bauteilherstellung auf, sondern ist an die Steuerung **16** des Bestrahlungsmoduls 12 angeschlossen. Das Bestrahlungsmodul 12 steuert/regelt also nicht nur den Laser 9 und die Ablenkeinheit 10, sondern auch das Pulvermanagement in der Prozesskammer 4. Am Bestrahlungsmodul 12 ist weiterhin eine externe Anzeige/Bedienpanel **17** angebracht.

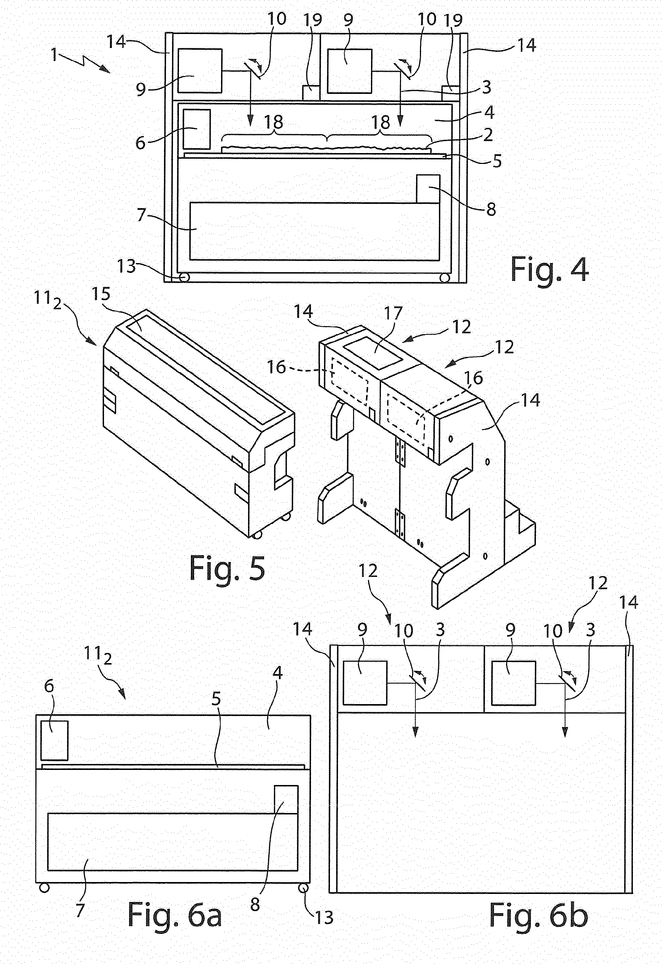

In **Fig. 4** ist eine andere Laserbearbeitungsmaschine 1 gezeigt, die aus einem Prozesskammermodul **11₂** und zwei Bestrahlungsmodulen 12 lösbar zusammengesetzt ist. Die Bestrahlungsmodule 12 sind baugleich zu dem Bestrahlungsmodul 12 der Fign. 1-3, während das Prozesskammermodul 11₂ doppelt so breit wie das Prozesskammermodul 11₁ der Fign. 1-3 ausgeführt ist. Die beiden Bestrahlungsmodule 12 sind Seite an Seite aneinander befestigt und weisen endseitig jeweils zwei Seitenwangen 14 auf, zwischen denen das Prozesskammermodul 11₂ passgenau eingeschoben ist. Die beiden Bestrahlungsmodule 12 werden steuerungstechnisch in einem Master-Slave Konzept verbunden und optisch miteinander referenziert, um das Bearbeitungsfeld der Prozesskammer 4 auf die miteinander überlappenden Bearbeitungsteilfelder **18** der beiden Laserstrahlen 3 der Bestrahlungsmodule 12 aufzuteilen.

Jedes Bestrahlungsmodul 12 weist eine Steuerungsschnittstelle (nicht gezeigt) zum Verbinden mit der Steuerungsschnittstelle des anderen Bestrahlungsmoduls auf, um die Steuerungen 16 der beiden Bestrahlungsmodule 12 miteinander zu verbinden. Die Steuerungsschnittstelle kann beispielsweise eine drahtlose Schnittstelle oder eine elektronische Maschinenschnittstelle sein, die beidseitig an jedem Bestrahlungsmodul 12 angeordnet ist, um sich mit der Maschinenschnittstelle eines benachbarten Bestrahlungsmoduls 12 zu verbinden. Das eine Bestrahlungsmodul 12 wird als Mastermodul und das andere Bestrahlungsmodul 12 als ein vom Mastermodul gesteuertes Slavemodul betrieben.

Die beiden Bestrahlungsmodule 12 weisen jeweils einen optischen Sensor **19** (z.B. Kamera) auf, dessen Erfassungsbereich eingerichtet ist, zumindest teilweise das Bearbeitungsteilfeld 18 des jeweils anderen Bestrahlungsmoduls zu erfassen. So kann bspw. das Master-Bestrahlungsmodul 12 mittels seines Laserstrahls 3 eine Bearbeitung durchführen oder festgelegte Kalibrationspunkte beleuchten, die wiederum der Sensor 19 des benachbarten Slave-Bestrahlungsmoduls 12 erfasst und damit seine eigene Positionierung gegenüber dem Master-Bestrahlungsmodul kalibriert. Im Fall von weiteren aneinander gereihten Bestrahlungsmodulen kann sich dann das nächste Slave-Bestrahlungsmodulkann auf ein bereits kalibriertes Slave-Bestrahlungsmodul kalibrieren usw., bis alle Slave-Bestrahlungsmodule gegenüber dem Master-Bestrahlungsmodul kalibriert sind.

Die Versorgung des Prozesskammermoduls 11₂ mit Strom, Wasser, Steuerungsdaten etc. erfolgt ausschließlich über die Bestrahlungsmodule 12, wobei die hierfür am Prozesskammermodul 11₂ und an den Bestrahlungsmodulen 12 erforderlichen Anschlüsse und Schnittstellen in der Zeichnung nicht dargestellt sind. Das Prozesskammermodul 11₂ weist selbst keine eigene Steuerung auf, sondern ist an die Master-Steuerung 16 des Master-Bestrahlungsmoduls 12 angeschlossen. Die MasterSteuerung 16 steuert/regelt also nicht nur die Laser 9 und die Ablenkeinheiten 10 der beiden Bestrahlungsmodule 12, sondern auch das Pulvermanagement in der Prozesskammer 4. An den Bestrahlungsmodulen 12 ist weiterhin das externe Anzeige/Bedienpanel 17 angebracht, das für beide Bestrahlungsmodule 12 verwendet wird.

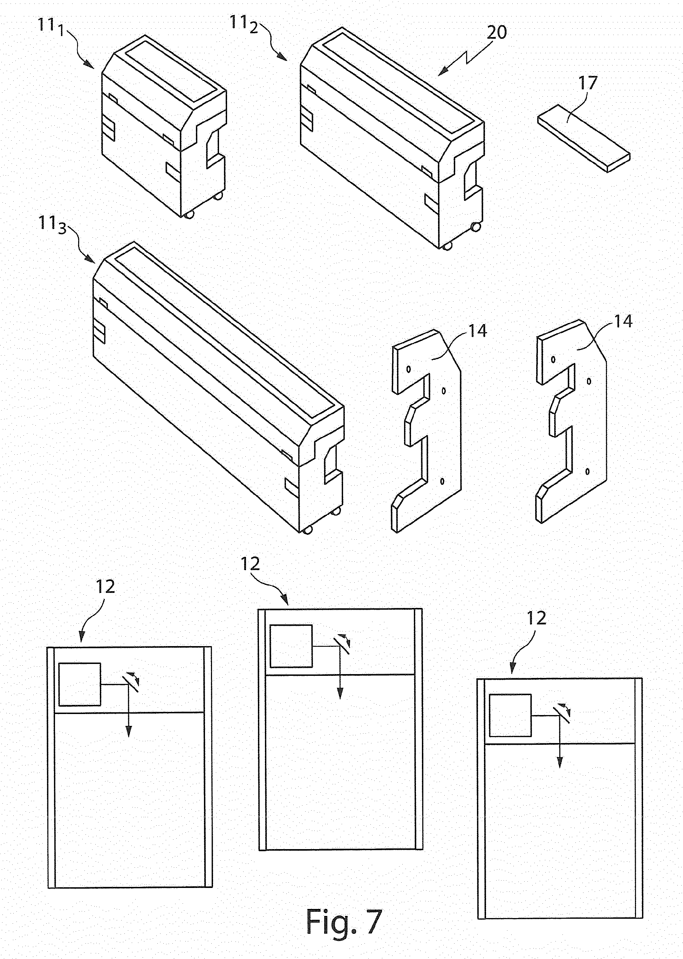

**Fig. 7** zeigt ein Modulsystem **20** zum Zusammensetzen von Laserbearbeitungsmaschinen 1, bestehend aus mehreren unterschiedlich breiten Prozesskammermodulen 11₁, 11₂, 11₃ und mehreren baugleichen Bestrahlungsmodulen 12. Dabei entspricht die Breite des Prozesskammermoduls 11₁ der Breite eines Bestrahlungsmoduls 12, die Breite des Prozesskammermoduls 11₂ der Breite zweier Bestrahlungsmodule 12 und die Breite des Prozesskammermoduls 11₃ der Breite von n (n≥3) Bestrahlungsmodulen 12. Außerdem weist das Modulsystem 20 noch mindestens zwei Seitenwangen 14 und mindestens ein externes Anzeige/Bedienpanel 17 auf. Je nach gewünschter Prozesskammergröße wird das entsprechende Prozesskammermodul 11₁, 11₂, 11₃ ausgewählt und die entsprechende Anzahl an Bestrahlungsmodulen 12 aneinander gereiht. Beim Aneinanderreihen der Bestrahlungsmodule 12 folgt die Steuerung 16 jedes weiteren angeschlossenen Bestrahlungsmoduls 12 der Steuerung 16 des ersten Bestrahlungsmoduls 12, welches somit das Mastermodul definiert.

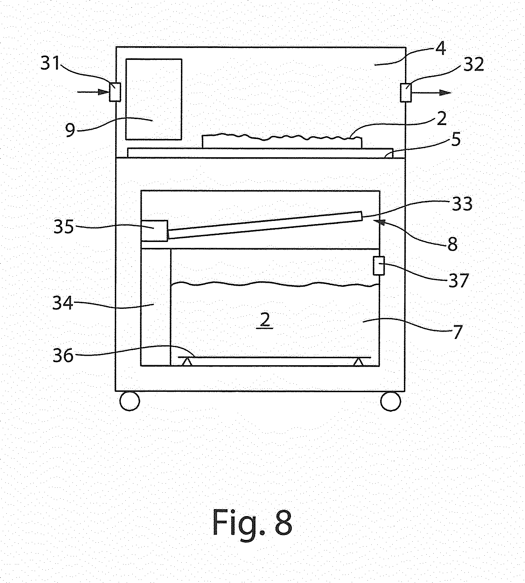

Wie in **Fig. 8** gezeigt, kann die Prozesskammer 4 der Prozesskammermodule 11₁-11₃ bis auf einen Gaseinlass **31** und einen Gasauslass **32** gasdicht ausgeführt sein, um die Prozesskammer 4 evakuieren oder mit einem inerten Gas spülen zu können.

Weiterhin können ein unter einem Winkel gegen die Horizontale geneigtes Sieb **33** und ein unterhalb des mindestens einen Siebs 33 derart angeordneter Auffangbehälter **34** vorgesehen sein, dass sich nicht siebbares Materialpulver 2 gravitationsunterstützt entlang des einen Siebs 33 bewegt und in dem Auffangbehälter 34 aufgefangen wird. Vorteilhafterweise wird das Sieb 33 durch einen Antrieb **35** schwingend angetrieben. Das Materialpulver 2 wird im Prozesskammermodul in einem in sich geschlossenen Pulverkreislauf geführt, der das mindestens eine Sieb 33 und mindestens eine Förderstrecke (nicht gezeigt) zum Zuführen des durch das mindestens eine Sieb 33 gesiebten Materialpulvers 2 in das Pulverreservoir 7 umfasst. Vorzugsweise ist die Bauplattform 5 von anderen Komponenten des Pulverkreislaufs gasdicht abtrennbar ausgeführt.

Das Pulverreservoir 7 umfasst weiterhin Erfassungsmittel **36** zur Pulvermengenerfassung, wie z.B. eine Waage, sowie einen verschließbaren Pulvereinlass 37 zur dosierten Pulverzuführung in das Pulverreservoir 7 oder in den Pulverkreislauf. Beispielsweise kann eine Kartusche mit Materialpulver 2 an den Pulvereinlass 37 angeschlossen werden. Das Erfassungsmittel 36 wiegt nach einer Bauteilherstellung das im Pulverreservoir 7 bzw. Pulverkreislauf noch vorhandene Materialpulver 2 und öffnet bei Bedarf den Pulvereinlass 37.

Außerdem können Versorgungsstationen (nicht gezeigt) vorgesehen sein, an die das Prozesskammermodul 11₁-11₃ angeschlossen werden kann und die wie das Bestrahlungsmodul 12 einen Strom-, Wasser-, Gas- und/oder einen Datenanschluss aufweisen. Mit Strom kann eine Pulvervorheizung/Bauteilabkühlung geregelt von der Prozesskammer 4 durchgeführt werden, Wasser kann ebenfalls für die Bauteilabkühlung oder Kühlung anderer Prozesskammerkomponenten verwendet werden. Diese Funktion kann entweder durch eine einfache Steuerung in der Prozesskammer 4 oder durch eine Steuerung der Versorgungsstation via Datenanschluss erfolgen. Der Gasanschluss kann für eine Schutzgasatmosphäre in der Prozesskammer 4 sorgen, z.B. wenn das Bauteil entnommen werden soll.

Ob notwendige Steuerungen für die Prozesskammermodule in diesem Modul oder in den Bestrahlungsmodulen und Versorgungsstationen untergebracht werden, hängt insbesondere davon ab, ob die Bestrahlungsmodule eher zusammengeschlossen als Master und Slave verwendet werden oder eher einzeln. Üblicherweise wird es jedoch mehr Prozesskammermodule als Bestrahlungsmodule geben, da man bevorzugt die Prozesskammermodule immer nur für ein Material verwendet und somit immer nur die Prozesskammermodule mit den gerade benötigten Materialien verwendet. Des Weiteren wird es Prozesskammermodule geben, bei denen das Bauteil abkühlt oder Pulver vorgeheizt wird. Somit kann es günstiger sein, nur die Bestrahlungsstationen mit einer Steuerung für die Pulveraufbringung in dem Prozesskammermodul auszustatten als alle Prozesskammermodule. Ähnlich verhält es sich mit Steuerungen für andere Funktionen des Pulverkreislaufs/Heizungen etc. Im Fall von sehr breiten Prozesskammermodulen, bei denen immer mehrere Bestrahlungsmodule benötigt werden, wäre es jedoch wiederum günstiger, lediglich die Prozesskammermodule mit Steuerungen für das Prozesskammermodul auszustatten und nicht jedes Bestrahlungsmodul. Auch kann es vorteilhaft sein, die Steuerung modular auszuführen und je nach Produktion die Bestrahlungsmodule oder die Prozesskammermodule mit Steuerungen auszustatten.

## Patentansprüche

1. Bearbeitungsmaschine (1) zum Herstellen von Bauteilen durch schichtweises Aufbauen aus Materialpulver (2) und schichtweises Verfestigen des Materialpulvers (2) mittels mindestens eines Energiestrahls (3),
mit pulverführenden Komponenten, die zumindest eine Prozesskammer (4) mit einer Bauplattform (5) und mit einem Pulverbeschichter (6) zum schichtweisen Aufbringen von Materialpulver (2) auf die Bauplattform (5) sowie ein Pulverreservoir (7) für das dem Pulverbeschichter (6) zuzuführende Materialpulver (2) umfassen,
mit mindestens einer Energiestrahlquelle (9) zum Erzeugen des mindestens einen Energiestrahls (3), und
mit mindestens einer Strahlführung (10) zum Ausrichten des mindestens einen Energiestrahls (3) auf das auf die Bauplattform (5) aufgebrachte Materialpulver (2),
wobei die Bearbeitungsmaschine (1) aus einem Prozesskammermodul (11₂, 11₃), welches alle pulverführenden Komponenten (4-7) der Bearbeitungsmaschine (1) aufweist, und mindestens einem Bestrahlungsmodul (12), welches die mindestens eine Energiestrahlquelle (9) und die mindestens eine Strahlführung (10) aufweist, lösbar zusammengesetzt ist,
**dadurch gekennzeichnet,**
**dass** die Bearbeitungsmaschine (1) aus dem Prozesskammermodul (11₂, 11₃) und mehreren, in einer Reihe nebeneinander angeordneten Bestrahlungsmodulen (12) lösbar zusammengesetzt ist, wobei die von den Energiestrahlen (3) zweier benachbarter Bestrahlungsmodule (12) auf der Bauplattform (5) jeweils abgedeckten Bearbeitungsteilfelder (18) miteinander teilweise überlappen.

2. Bearbeitungsmaschine nach Anspruch 1, **dadurch gekennzeichnet, dass** die Breite der Bauplattform (5) des Prozesskammermoduls (11₂, 11₃) ungefähr der Breite der Bearbeitungsfelder (18) der mehreren Bestrahlungsmodule (12) entspricht.

3. Bearbeitungsmaschine nach Anspruch 1 oder 2, **dadurch gekennzeichnet, dass** eines der mehreren Bestrahlungsmodule (12) als Mastermodul und jedes andere Bestrahlungsmodul (12) als ein vom Mastermodul gesteuertes Slavemodul betrieben sind.

4. Bearbeitungsmaschine nach einem der vorhergehenden Ansprüche, **dadurch gekennzeichnet, dass** eines oder einige der Bestrahlungsmodule (12), insbesondere alle Bestrahlungsmodule (12), mindestens einen optischen Sensor (19), insbesondere eine Kamera, aufweisen, dessen Erfassungsbereich eingerichtet ist, zumindest teilweise ein Bearbeitungsfeld (18) eines benachbarten Bestrahlungsmoduls (18) zu erfassen.

5. Bearbeitungsmaschine nach einem der vorhergehenden Ansprüche, **dadurch gekennzeichnet, dass** jedes Bestrahlungsmodul (12) eine Steuerungsschnittstelle zum Verbinden mit einer Steuerungsschnittstelle eines anderen Bestrahlungsmoduls (12) aufweist.

6. Bearbeitungsmaschine nach einem der vorhergehenden Ansprüche, **dadurch gekennzeichnet, dass** eines oder einige der Bestrahlungsmodule (12), insbesondere bei mehreren Bestrahlungsmodulen (12) die äußeren Bestrahlungsmodule (12), oder das Prozesskammermodul (11₂, 11₃) Referenzierhilfen (14), insbesondere Seitenwangen oder Referenzierbolzen, zum Zusammensetzen der Bearbeitungsmaschine (1) aufweisen.

7. Bearbeitungsmaschine nach einem der vorhergehenden Ansprüche, **dadurch gekennzeichnet, dass** das Prozesskammermodul (11₂, 11₃) während der Bauteilherstellung ausschließlich über das mindestens eine Bestrahlungsmodul (12) an Versorgungsquellen angeschlossen ist.

8. Bearbeitungsmaschine nach einem der vorhergehenden Ansprüche, **dadurch gekennzeichnet, dass** das Prozesskammermodul (11₂, 11₃) an die Steuerung (16) des mindestens einen Bestrahlungsmoduls (12) angeschlossen ist.

9. Bearbeitungsmaschine nach einem der vorhergehenden Ansprüche, **dadurch gekennzeichnet, dass** die Prozesskammer (4) des Prozesskammermoduls (11₂, 11₃) als eine in sich abgeschlossene Kammer mit einem Prozesskammerfenster (15) ausgeführt ist, durch das der mindestens eine Energiestrahl (9) in die Prozesskammer (4) einkoppelbar ist.

10. Bearbeitungsmaschine nach einem der vorhergehenden Ansprüche, **dadurch gekennzeichnet, dass** das Prozesskammermodul (11₂, 11₃) und/oder das mindestens eine Bestrahlungsmodul (12) auf Rollen (13) oder Gleitlagern gelagert sind.

11. Bearbeitungsmaschine nach einem der vorhergehenden Ansprüche, **dadurch gekennzeichnet, dass** die Bearbeitungsmaschine eine Laserbearbeitungsmaschine ist und die Energiestrahlquelle als ein Laser (9) zum Erzeugen eines Laserstrahls (3) und die Strahlführung als eine Ablenkeinheit (10) zum zweidimensionalen Ablenken des Laserstrahls (3) ausgebildet sind.

12. Bearbeitungsmaschine nach einem der vorhergehenden Ansprüche, **dadurch gekennzeichnet, dass** die Prozesskammer (4) des Prozesskammermoduls (11₂, 11₃) gasdicht und mit einem Gaseinlass (31) und einem Gasauslass (32) ausgeführt ist.

13. Bearbeitungsmaschine nach einem der vorhergehenden Ansprüche, **dadurch gekennzeichnet, dass** die Bauplattform (5) von anderen Komponenten des Pulverkreislaufs gasdicht abtrennbar ausgeführt ist.

14. Modulsystem (20) zum Zusammensetzen einer Bearbeitungsmaschine (1) nach einem der vorhergehenden Ansprüche, mit mehreren unterschiedlich breiten Prozesskammermodulen (11₂, 11₃) und mit mehreren Bestrahlungsmodulen (12), wobei die Breite der Prozesskammermodule (11₂, 11₃) jeweils der Gesamtbreite von zumindest einigen, in einer Reihe nebeneinander angeordneten Bestrahlungsmodulen (12) entspricht.

15. Modulsystem nach Anspruch 14, **dadurch gekennzeichnet, dass** die mehreren Bestrahlungsmodule (12) gleichbreit ausgebildet sind.

## Claims

1. A processing machine (1) for producing components by a layer-by-layer construction from a material powder (2) and by a layer-by-layer solidification of the material powder (2) by means of at least one energy beam (3), comprising
powder-conducting elements which comprise at least one process chamber (4) having a construction platform (5) and having a powder coater (6) for the layer-by-layer application of a material powder (2) to the construction platform (5), and a powder reservoir (7) for the material powder (2) to be infed to the powder coater (6),
at least one energy beam source (9) for generating the at least one energy beam (3), and
at least one beam guide (10) for aligning the at least one energy beam (3) toward the material powder (2) that is applied to the construction platform (5), wherein the processing machine (1) is releasably assembled from a process chamber module (11₂, 11₃) which has all powder-conducting elements (4-7) of the processing machine (1) and at least one radiating module (12) which includes the at least one energy beam source (9) and the at least one beam guide (10),
**characterized in that**
the processing machine (1) is releasably assembled from the process chamber module (11₂, 11₃) and a plurality of radiating modules (12) that are disposed in a row beside one another, wherein the processing part-fields (18) on the construction platform (5) that are in each case covered by the energy beams (3) of two adjacent radiating modules (12) are partially mutually overlapping.

2. The processing machine as claimed in claim 1, **characterized in that** the width of the construction platform (5) of the process chamber module (11₂, 11₃) corresponds to approximately the width of the processing fields (18) of the plurality of radiating modules (12).

3. The processing machine as claimed in claim 1 or 2, **characterized in that** one of the plurality of radiating modules (12) is operated as a master module, and each of the other radiating modules (12) is operated as a slave module that is controlled by the master module.

4. The processing machine as claimed in one of the preceding claims, **characterized in that** one or some of the radiating modules (12), in particular all radiating modules (12), have at least one optical sensor (19), in particular a camera, the detection range of said optical sensor (19) being configured for detecting at least part of a processing field (18) of an adjacent radiating module (18).

5. The processing machine as claimed in one of the preceding claims, **characterized in that** each radiating module (12) has a controller interface for connecting to a controller interface of another radiating module (12).

6. The processing machine as claimed in one of the preceding claims, **characterized in that** one or some of the radiating modules (12), in the case of a plurality of radiating modules (12) in particular the outer radiating modules (12), or the process chamber module (11₂, 11₃) has/have referencing aids (14), in particular side plates or referencing bolts, for assembling the processing machine (1).

7. The processing machine as claimed in one of the preceding claims, **characterized in that** the process chamber module (11₂, 11₃) during the production of the component is connected to supply sources exclusively by way of the at least one radiating module (12).

8. The processing machine as claimed in one of the preceding claims, **characterized in that** the process chamber module (11₂, 11₃) is connected to the controller (16) of the at least one radiating module (12).

9. The processing machine as claimed in one of the preceding claims, **characterized in that** the process chamber (4) of the process chamber module (11₂, 11₃) is embodied as a self-contained chamber having a process chamber window (15) through which the at least one energy beam (9) is capable of being coupled into the process chamber (4).

10. The processing machine as claimed in one of the preceding claims, **characterized in that** the process chamber module (11₂, 11₃) and/or the at least one radiating module (12) are mounted on rollers (13) or sliding bearings.

11. The processing machine as claimed in one of the preceding claims, **characterized in that** the processing machine is a laser processing machine, and the energy beam source is configured as a laser (9) for generating a laser beam (3), and the beam guide is configured as a deflection unit (10) for deflecting the laser beam (3) in a two-dimensional manner.

12. The processing machine as claimed in one of the preceding claims, **characterized in that** the process chamber (4) of the process chamber module (11₂, 11₃) is embodied so as to be gas-tight and to have a gas inlet (31) and a gas outlet (32).

13. The processing machine as claimed in one of the preceding claims, **characterized in that** the construction platform (5) is embodied so as to be separable in a gas-tight manner from other elements of the powder circuit.

14. A modular system (20) for assembling a processing machine (1) as claimed in one of the preceding claims, comprising a plurality of process chamber modules (11₂, 11₃) of different widths, and a plurality of radiating modules (12), wherein the width of the process chamber modules (11₂, 11₃) in each case corresponds to the overall width of at least some radiating modules (12) that are disposed in a row beside one another.

15. The modular system as claimed in claim 14, **characterized in that** the radiating modules (12) have identical widths.

## Revendications

1. Machine d'usinage (1) dévolue à la fabrication de pièces structurelles par constitution stratifiée à partir d'une poudre de matériau (2), et par solidification stratifiée de ladite poudre de matériau (2) à l'aide d'au moins un faisceau d'énergie (3), comprenant des composants de guidage de la poudre, qui incluent au moins une chambre de traitement (4) comportant une plate-forme d'élaboration (5) et un applicateur (6) conçu pour déposer de la poudre de matériau (2), par couches, sur ladite plate-forme d'élaboration (5), ainsi qu'un réservoir (7) dédié à la poudre de matériau (2) devant être délivrée audit applicateur (6),
au moins une source (9) de rayonnement d'énergie, destinée à engendrer le faisceau d'énergie (3) à présence minimale, et
au moins un guide-faisceau (10) affecté à l'orientation dudit faisceau d'énergie (3), à présence minimale, vers la poudre de matériau (2) déposée sur la plate-forme d'élaboration (5),
la machine d'usinage (1) étant composée, de manière dissociable, d'un module (11₂, 11₃) à chambre de traitement qui comporte tous les composants (4-7) de guidage de la poudre, équipant ladite machine d'usinage (1), et d'au moins un module de rayonnement (12) qui comporte la source (9) de rayonnement d'énergie, à présence minimale, et le guide-faisceau (10) à présence minimale,
**caractérisée par le fait**
**que** ladite machine d'usinage (1) est composée, de manière dissociable, du module (11₂, 11₃) à chambre de traitement et de plusieurs modules de rayonnement (12) agencés avec juxtaposition en une rangée, sachant que les zones partielles d'usinage (18) respectivement couvertes, sur la plate-forme d'élaboration (5), par les faisceaux d'énergie (3) de deux modules de rayonnement (12) voisins, se chevauchent mutuellement au moins en partie.

2. Machine d'usinage selon la revendication 1, **caractérisée par le fait que** la largeur de la plate-forme d'élaboration (5) du module (11₂, 11₃) à chambre de traitement correspond, approximativement, à la largeur des zones d'usinage (18) des multiples modules de rayonnement (12).

3. Machine d'usinage selon la revendication 1 ou 2, **caractérisée par le fait que** l'un des multiples modules de rayonnement (12) et chaque autre module de rayonnement (12) sont actionnés, respectivement, en tant que module dominant et en tant que module asservi commandé par ledit module dominant.

4. Machine d'usinage selon l'une des revendications précédentes, **caractérisée par le fait que** l'un ou quelques-uns des modules de rayonnement (12), en particulier tous lesdits modules de rayonnement (12), comporte(nt) au moins un capteur optique (19), notamment une caméra dont la zone de détection est agencée en vue de détecter, au moins en partie, une zone d'usinage (18) d'un module de rayonnement (12) voisin.

5. Machine d'usinage selon l'une des revendications précédentes, **caractérisée par le fait que** chaque module de rayonnement (12) est muni d'un interface de commande dédié à la liaison avec un interface de commande d'un autre module de rayonnement (12).

6. Machine d'usinage selon l'une des revendications précédentes, **caractérisée par le fait que** l'un ou quelques-uns des modules de rayonnement (12), en particulier les modules de rayonnement (12) extérieurs en présence de plusieurs modules de rayonnement (12), ou le module (11₂, 11₃) à chambre de traitement, comporte(nt) des aides au repérage (14), notamment des parois latérales ou des goupilles de repérage affectées à l'assemblage de ladite machine d'usinage (1).

7. Machine d'usinage selon l'une des revendications précédentes, **caractérisée par le fait que** le module (11₂, 11₃) à chambre de traitement est raccordé à des sources d'alimentation, au cours de la fabrication des pièces structurelles, exclusivement par l'intermédiaire du module de rayonnement (12) à présence minimale.

8. Machine d'usinage selon l'une des revendications précédentes, **caractérisée par le fait que** le module (11₂, 11₃) à chambre de traitement est raccordé à la commande (16) du module de rayonnement (12) à présence minimale.

9. Machine d'usinage selon l'une des revendications précédentes, **caractérisée par le fait que** la chambre de traitement (4) du module (11₂, 11₃) à chambre de traitement est réalisée sous la forme d'une chambre en soi confinée, munie d'une fenêtre (15) à travers laquelle le faisceau d'énergie (3), à présence minimale, peut être introduit dans ladite chambre de traitement (4).

10. Machine d'usinage selon l'une des revendications précédentes, **caractérisée par le fait que** le module (11₂, 11₃) à chambre de traitement, et/ou le module de rayonnement (12) à présence minimale, est (sont) monté(s) sur des rouleaux (13) ou sur des paliers lisses.

11. Machine d'usinage selon l'une des revendications précédentes, **caractérisée par le fait que** ladite machine d'usinage est une machine d'usinage au laser, la source de rayonnement d'énergie et le guide-faisceau étant réalisés, respectivement, sous la forme d'un laser (9) conçu pour engendrer un faisceau laser (3) et sous la forme d'une unité déflectrice (10) affectée à la déviation bidimensionnelle dudit faisceau laser (3).

12. Machine d'usinage selon l'une des revendications précédentes, **caractérisée par le fait que** la chambre de traitement (4) du module (11₂, 11₃) à chambre de traitement est de réalisation étanche aux gaz, avec une admission de gaz (31) et une sortie de gaz (32).

13. Machine d'usinage selon l'une des revendications précédentes, **caractérisée par le fait que** la plate-forme d'élaboration (5) est réalisée pour pouvoir être séparée, de manière étanche aux gaz, d'avec d'autres composants du circuit de poudre.

14. Système modulaire (20) dédié à l'assemblage d'une machine d'usinage (1) conforme à l'une des revendications précédentes, comprenant plusieurs modules (11₂, 11₃) à chambres de traitement, de largeurs différentes, et plusieurs modules de rayonnement (12), la largeur desdits modules (11₂, 11₃) à chambres de traitement correspondant, à chaque fois, à la largeur totale d'au moins quelques modules de rayonnement (12) agencés avec juxtaposition en une rangée.

15. Système modulaire (20) selon la revendication 14, **caractérisé par le fait que** les multiples modules de rayonnement (12) sont réalisés avec largeurs identiques.
